(19) **Europäisches Patentamt**

**European Patent Office**

**Office européen des brevets**

(11) **EP 1 190 936 B1**

(12) **EUROPÄISCHE PATENTSCHRIFT**

(45) Veröffentlichungstag und Bekanntmachung des Hinweises auf die Patenterteilung:
**26.10.2005 Patentblatt 2005/43**

(51) Int Cl.⁷: **B62D 5/06**

(21) Anmeldenummer: **01110964.2**

(22) Anmeldetag: **07.05.2001**

(54) **Zusätzliche Rückfallebene bei Ausfall von Winkelsensoren für "Steer-by-wire"-Systeme ohne mechanische/hydraulische Rückfallverbindung und Verfahren zur Ermittlung des Verdrehwinkels der Lenkhandhabe einer Servolenkung**

Additional fall-back level in the case of failure of angle sensors for "steer-by-wire" systems without mechanical/hydraulical fall-back connection and procedure for determining the angle of rotation of the steering wheel of a power steering

Niveau de repli supplémentaire au cas de panne de capteurs d'angle pour des systèmes "steer-by-wire" sans connection de repli mécanique/hydraulique et procédé d'évaluation de l'angle de rotation du volant d'une direction assistée

(84) Benannte Vertragsstaaten:
**DE ES FR GB IT**

(30) Priorität: **20.09.2000 DE 10046854**

(43) Veröffentlichungstag der Anmeldung:
**27.03.2002 Patentblatt 2002/13**

(73) Patentinhaber: **ThyssenKrupp Presta SteerTec GmbH**
**40476 Düsseldorf (DE)**

(72) Erfinder: **Clephas, Bernd Dr.**
**D-73730 Esslingen (DE)**

(74) Vertreter: **LENZING GERBER**
**Patentanwälte**
**Postfach 20 05 09**
**40103 Düsseldorf (DE)**

(56) Entgegenhaltungen:
**DE-A- 19 855 404**

EP 1 190 936 B1

**Beschreibung**

Die vorliegende Erfindung betrifft eine Servolenkung gemäß den Merkmalen des Oberbegriffs des Anspruchs 1.

Eine gattungsgemäße Servolenkung in hydraulischer Ausführung für nicht-spurgebundene Fahrzeuge ist aus der DE 198 55 404 bekannt. Die Lenkverstellung der gelenkten Fahrzeugräder erfolgt bei dieser Servolenkung mittels eines hydraulischen Stellaggregats, welches über ein Wechselventil mit jeweils einem von zwei bzw. mehreren Hydraulikkreisen verbindbar ist, die bei Normalbetrieb parallel und funktional gleichgerichtet arbeiten, so daß bei einer Störung unterbrechungsfrei auf einen anderen Hydraulikkreis umgeschaltet werden kann. Jeder Hydraulikkreis umfaßt zur Steuerung des Stellaggregats ein Servoventil, welches in Abhängigkeit von einem Soll-IstwertVergleich des Lenkwinkels durch eine Steuer- und Regeleinrichtung betätigt wird, die mit einem von den gelenkten Fahrzeugrädern betätigten Lenkwinkel-Istwertgeber und einem über die fahrerseitig betätigte Lenkhandhabe gesteuerter Lenkwinkel-Sollwertgeber verbunden ist. Die Lenkhandhabe ist mit einem Handmomentensteller antriebsmäßig gekoppelt, welcher z. B. durch einen selbsthemmungfreien Elektromotor gebildet ist, der seinerseits durch eine Steuer- und Regelanordnung gesteuert wird. Die Servolenkung verfügt zudem über mindestens einen Winkelsensor, welcher fahrerseitig über die Lenkhandhabe betätigt wird.

Die Servolenkung gemäß der DE 198 55 404 offenbart keine Lösung dahingehend, daß auch bei Ausfall einer elektrischen Komponente, insbesondere des oder der Winkelsensoren, welche die Stellung der Lenkhandhabe ermitteln, eine Lenkung des Kraftfahrzeugs weiterhin möglich ist.

Aus der DE 100 18 191 ist eine Lenkeinrichtung für ein Fahrzeug bekannt, bei der ein Lenkmechanismus und ein Lenkrad nicht mechanisch miteinander verbunden sind. Die Lenkeinrichtung betreibt einen Lenkmotor des Lenkmechanismus entsprechend einem Lenkdrehmoment zur Vergrößerung oder Verkleinerung eines Lenkwinkels. Das Lenkdrehmoment wird zu diesem Zweck anhand der durch das Detektieren eines Drehwinkels eines mit einer Drehwelle des Lenkrads verbundenen Elektromotors und eines zum Elektromotor fließenden elektrischen Stroms erhaltenen Ergebnisses, eines Trägheitsmoments des Lenkrads und eines Trägheitsmoments des Elektromotors berechnet. Hierdurch ist es möglich auf einen Drehmomentensensor, wie eine Torsionsfeder, der viel Einbauplatz benötigt und hohe Kosten verursacht, zu verzichten.

Aufgabe der vorliegenden Erfindung ist es, eine Servolenkung bereitzustellen, welche auch bei Ausfall zumindest einer elektrischen Komponente, insbesondere eines oder aller Winkelsensoren zur Ermittlung der Position der Lenkhandhabe, eine Lenkwinkelvorgabe mittels der Lenkhandhabe ermöglicht.

Diese Aufgabe wird erfindungsgemäß mit einer Servolenkung gemäß den Merkmalen des unabhängigen Anspruchs 1 gelöst.

Vorteilhafte Ausgestaltungen dieser Servolenkung ergeben sich durch die Merkmale der rückbezogenen Unteransprüche.

Ein erfindungsgemäßes Verfahren zur Ermittlung des Verdrehwinkels der Lenkhandhabe einer Servolenkung wird mit Anspruch 15 beansprucht.

Bei der erfindungsgemäßen Servolenkung handelt es sich um ein "Steer-by-wire"-System ohne mechanische/hydraulische Verbindung zwischen Lenkrad und gelenkten Rädern. Man spricht auch davon, daß keine mechanische "Rückfall-Verbindung" zwischen Lenkrad und gelenkten Rädern vorhanden ist. Sofern die Servolenkung über einen hydraulischen Radwinkelsteller verfügt, wird der Hydraulikstrom über Proportionalventile oder pulsweitenmodulierte Schaltventile eingestellt und kann sowohl flußgesteuert (open center) als auch druckgesteuert (closed center) erfolgen. Die Stellung der Lenkhandhabe einerseits und der gelenkten Räder andererseits wird über Winkelsensoren erfaßt, aus deren Signalen die Lenkungs-Steuergeräte die erforderlichen Stellsignale berechnen und an die Ventile ausgeben. Für elektrische Lenkungen gilt prinzipiell die gleiche Systemarchitektur, nur handelt es sich dann bei dem Radwinkelsteller um einen Elektromotor und die Ventile sind durch eine Leistungselektronik ersetzt.

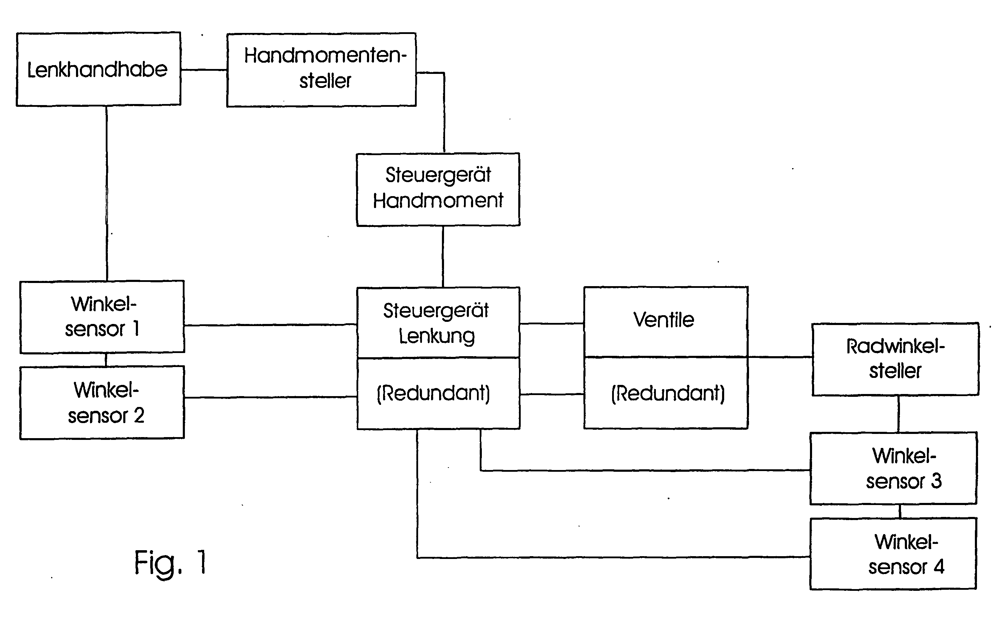

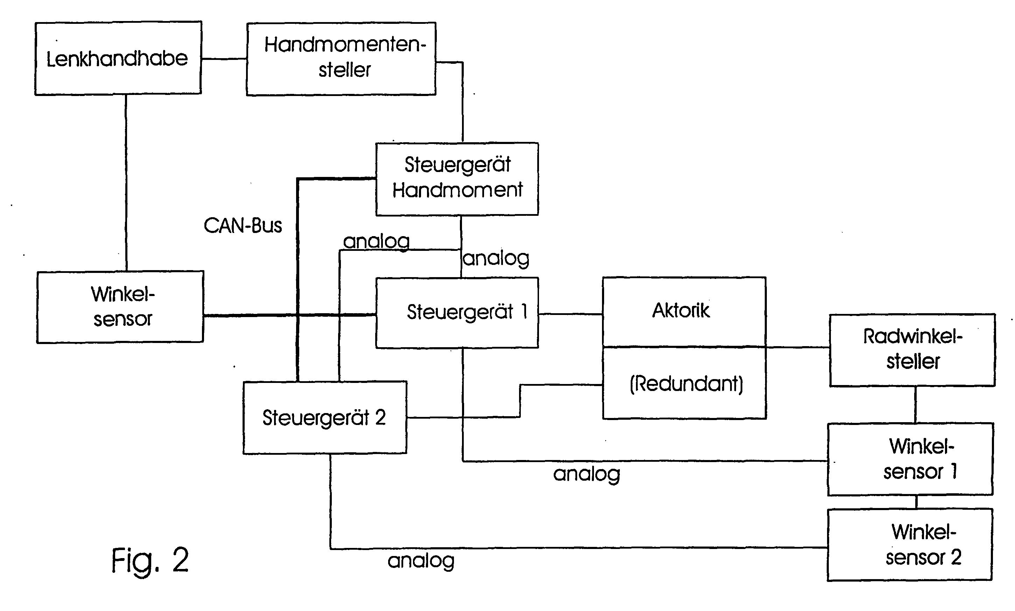

Die Fig. 1 und 2 zeigen eine mögliche Anbindung der
Lenkwinkelsensoren an die Lenkungs-Steuergeräte 1 und 2,
beispielsweise über analoge Schnittstelle oder CAN-Bus.

Ein Lenksystem besitzt keinen sicheren Zustand für einen potentiellen Ausfall und wird demzufolge in die höchste Sicherheitskategorie eingestuft. Daraus resultiert die Minimalanforderung, daß die Lenkfähigkeit bei Ausfall einer beliebigen Komponente oder Verbindung erhalten bleiben muß. Aus diesem Grund sind die Winkelsensoren am Lenkrad und auch an den Rädern, die Lenkungs-Steuergeräte sowie die Ventile mindestens doppelt vorhanden, wie es in Figur 1 dargestellt ist. Eine Ausnahme stellt der Radwinkelsteller dar, welcher in konventionellen Lenkungen ebenfalls nur einfach vorhanden ist, so daß die Einkreisigkeit an dieser Stelle als Stand der Technik betrachtet werden darf. Über diese Mindestanforderung hinaus ist eine möglichst hohe Verfügbarkeit des Systems anzustreben, und zwar die Lenkfähigkeit auch bei mehr als einem Fehler (Ausfall) zu erhalten. Beispielsweise kann dazu bei einer Ausführung mit zwei Lenkungs-Steuergeräten in "Fail-silent"-Architektur eine Verbindungsstruktur gewählt werden, bei welcher je ein Lenkradwinkelsensor und ein Lenkwinkelsensor sowie die beiden Lenkungs-Steuergeräte gemeinsam an einem (CAN)-Bus hängen, und die beiden anderen Winkelsensoren an einem weiteren (CAN)-Bus, welcher ebenfalls mit beiden Steuergeräten verbunden ist. Beiden Steuergeräten stehen damit alle Winkelsensoren zur Verfügung, so daß bei Ausfall eines Sensors beide Steuergeräte arbeitsfähig sind. Wie bereits ausgeführt, fehlt die mechanische Kraftrückmeldung am Lenkrad bei einem "Steer-by-wire"-System. Da eine derartige Rückmeldung für einen akzeptablen Komfort jedoch unerläßlich ist, wird ein Elektromotor zur Generierung des Handmoments eingesetzt. Der Motor ist, wie auch bei der erfindungsgemäßen Servolenkung vorsehbar, mit permanenten Magneten im Rotor ausgestattet (Gleichstrom- oder vorzugsweise EC-Servomotor als bürstenlose Ausführung) und verfügt über ein eigenes Steuergerät. Für die Erkennung der Rotorposition, insbesondere zur elektronischen Kommutierung bei EC-Motoren, und die Berechnung des erforderlichen Handmoments in Abhängigkeit von der Lenkradstellung wird im normalen fehlerfreien Betrieb auf einen der vorhandenen Lenkradwinkelsensoren zurückgegriffen.

Die Erfindung sieht vor, daß bei Ausfall des Steuergeräts, des Winkelsensors und/oder bei einem Fehler in der Ansteuerung die Ständerwicklung des Elektromotors des Handmomentenstellers vorteilhaft auf ein passives Widerstandsnetzwerk geschaltet wird. Der Motor generiert dann vorteilhaft selbsttätig ein Dämpfungselement, welches proportional zur Drehgeschwindigkeit der Lenkhandhabe ist. Dieser Betriebszustand stellt zwar einen eingeschränkten Komfort dar, ist jedoch in keiner Weise sicherheitskritisch und kann daher auch als Rückfallebene eingesetzt werden.

Die Erfindung macht es sich zu eigen, daß die von einem Gleichstrom- oder EC-Motor erzeugte elektromotorische Kraft (EMK) unterhalb der Nenndrehzahl des Motors nahezu proportional zu dessen Drehzahl ist. Bei unbeschalteter Ständerwicklung kann die EMK direkt an den Klemmen des Motors abgegriffen werden, wobei bei EC-Motoren die Kommutierung auf die Ständerstränge zu beachten ist. Bei externen Beschaltungen ist der Einfluß des Netzwerks zu berücksichtigen. Wenn es sich dabei jedoch um ein symmetrisches Widerstandsnetzwerk handelt, ist die an den Widerständen anliegende Spannung oder der durch sie hindurchfließende Strom ebenfalls näherungsweise proportional zur EMK, bei EC-Motoren wiederum unter Berücksichtigung der Kommutierung.

Für die Regelung/Überwachung des Handmomentenstellers sind im allgemeinen dessen Klemmenspannung und/oder Klemmenströme zu messen, so daß sich in der Rückfallebene, wenn z.B. beide Winkelsensoren zur Ermittlung des Lenkhandhabewinkels ausgefallen sind und die Stränge bzw. Wicklungen des Elektromotors auf Widerstände geschaltet sind, die EMK des Motors aus diesen Meßwerten bestimmen läßt. Aus der EMK wiederum läßt sich die Winkelgeschwindigkeit berechnen, deren Integration den Drehwinkel ergibt. Mit Hilfe des Handmomentenstellers läßt sich demzufolge der Lenkhandhabewinkel bzw. -winkelgeschwindigkeit ohne zusätzlichen Sensor bestimmen.

Der Lenkhandhabewinkel läßt sich jedoch nicht exakt berechnen, da mit abnehmender Drehgeschwindigkeit des Motors die EMK gegen Null und somit unter eine meßbare Schwelle sinkt. Da sehr niedrige Drehgeschwindigkeiten an der Lenkhandhabe somit nicht erfaßt werden, kann es zu einer Verschiebung des Lenkhandhabe-Nullpunktes kommen. Für das Lenksystem ist dies jedoch ohne Bedeutung, da es keine mechanische/hydraulische Verbindung gibt, die einen festen Nullpunkt des Lenkrads vorschreibt. Eine Nullpunkt-Verschiebung bedeutet daher lediglich einen geringen Komfortverlust, so daß die Geradeaus-Stellung der Lenkhandhabe nicht zwingend mehr den GeradeausLauf der Fahrzeugräder bedeutet. Die Nullpunkt-Verschiebung beeinflußt aber nicht die Lenkfähigkeit, zumal sich der Handmomentensteller zur Winkelschätzung ohnehin in seiner Rückfallebene befindet und das Handmoment damit lediglich von der Drehgeschwindigkeit des Lenkrads abhängt, nicht jedoch vom absoluten Winkel des Lenkrads und damit unabhängig von dessen Null-Lage ist.

Für den Algorithmus zur Schätzung eines Lenkradwinkels aus der EMK ergeben sich aus den bisher beschriebenen Kriterieren sowie weiteren Überlegungen insgesamt 7 Anforderungen, welche im folgenden zusammengestellt und - ohne Beschränkung der Allgemeinheit - am Beispiel eines 3-phasigen EC-Motors mit gemessenen Strangspannungen erläutert werden. Für einen Gleichstrommotor sind die Gleichungen in einer vereinfachten Form ebenso anwendbar.

1. Erkennung einer bereits minimalen EMK nach Betrag und Richtung sowie sichere Erkennung von EMK=0

Wie bereits ausgeführt, ist für die Winkelschätzung eine minimale Drehgeschwindigkeit an der Lenkhandhabe notwendig. Diese Drehgeschwindigkeit muß jedoch bei so niedrigen Werten liegen, so daß sie bei einer normalen Betätigung der Lenkhandhabe sicher überschritten wird. Die eingesetzte Meßtechnik/Filterung muß daher sicherstellen, daß die Meßwerte möglichst störungsfrei erfaßt werden. Für den Betrag der EMK ergibt sich bei einem dreiphasigen EC-Motor aus den drei gemessenen Strangspannungen

$$|u_{EMK}| = \sqrt{\frac{2}{3}(u_r^2 + u_s^2 + u_t^2)}$$

Das der Drehrichtung entsprechende Vorzeichen der EMK kann den Zeitverläufen der einzelnen Strangspannungen im Vergleich zueinander entnommen werden. Eine Berechnung nach diesem Verfahren ist jedoch sehr aufwendig und mit einem in Steuergeräten üblicherweise eingesetzen Mikrocontroller kaum realisierbar.

2. Die Berechnung muß mit einem Mikrocontroller realisierbar sein

Eine alternative Möglichkeit zur Berechnung der EMK ohne erforderliche Quadrat- oder Wurzeloperationen bietet folgender Algorithmus:

$$u_{\min} = \min\left(|u_r|, |u_s|, |u_t|\right)$$

$$u_{\max} = \max\left(|u_r|, |u_s|, |u_t|\right)$$

$$|u_{EMK}| = \frac{2}{7}(4^* u_{max} - u_{min})$$

Die EMK wird auf diese Weise mit elementaren mathematischen Operationen berechnet und weist einen vernachlässigbaren Fehler von maximal 3% auf.
Die Drehrichtung läßt sich am einfachsten durch eine Überwachung der Nulldurchgänge ermitteln, d.h. wenn eine der drei Strangspannungen einen positiven bzw. negativen Nulldurchgang aufweist, kann anhand des Vorzeichens der beiden anderen Strangspannungen erkannt werden, ob die Drehrichtung nach links oder rechts gerichtet ist. Diese Information kann in einem Faktor

$$u_r = \begin{cases} 1 & \textit{für Drehrichtung rechts} \\ 0 & \textit{für Drehzahl } 0 \\ -1 & \textit{für Drehrichtung links} \end{cases}$$

erfaßt werden. Drehzahl 0 (Stillstand) ist dann gegeben, wenn $u_{min}$ eine untere Schranke unterschreitet. Die Erkennung der Drehrichtung setzt einen Nulldurchgang mindestens einer der drei Strangspannungen voraus. Bei einem beispielsweise 10-poligen Motor ist daher im ungünstigsten Fall eine Drehung von 360°/10/6 = 6°, im Mittel eine Drehung um 3° erforderlich, bevor die Drehrichtung erkannt werden kann. Insgesamt ergibt sich die EMK zu

$$u_{EMK} = u_r \cdot |u_{EMK}|$$

3. Der Algorithmus muß so weit wie möglich Fehler in den Meßwerten erkennen

Für einen symmetrischen dreiphasigen EC-Motor gilt für die drei Strangspannungen

$$u_r + u_s + u_t = 0$$

Der Algorithmus kann leicht überprüfen, ob diese Bedingung erfüllt ist. Außerdem kann diese Beziehung dazu verwendet werden, einen kleinen Gleichspannungsoffset der Meßwerte zu kompensieren oder die Strangspannungen bewußt mit einer bekannten Offsetspannung zu überlagern, so daß die gemessenen Strangspannungen nie kleiner Null werden und damit eine vereinfachte Meßtechnik gestatten, welche nur positive Werte erfassen muß.

4. Der nichtlineare Zusammenhang zwischen EMK und Drehgeschwindigkeit des Motors ist zu berücksichtigen

Für die Drehgeschwindigkeit des Motors gilt

$$\omega = k_m(\omega) \cdot u_{EMK}$$

Für Drehzahlen unterhalb der Nenndrehzahl des Motors ist $k_m$ nahezu konstant und allein von den elektrischen und geometrischen Daten des Motors abhängig. $k_m$ kann rechnerisch oder meßtechnisch bestimmt werden. Insbesondere bei höheren Lenkgeschwindigkeiten ist der Zusammenhang zwischen Drehgeschwindigkeit und EMK jedoch nicht mehr völlig linear, so daß die geschätzte Winkeländerung nicht vollständig proportional zur Drehgeschwindigkeit am Lenkrad ist. Für das Lenksystem wirkt sich diese Nicht-Linearität als leicht variierende Lenkübersetzung aus, die sich durch eine drehzahlabhängige Variierung von $k_m$, z.B. in Form einer vorher meßtechnisch bestimmten und abgespeicherten Kennlinie, kompensieren läßt.

5. Der Algortithmus muß stufenlos auf den letzen gültigen Wert des Winkelsensors aufsetzen

Der Übergang vom normalen Betrieb in die Rückfallebene muß fließend erfolgen. Bei der Verwendung des geschätzten Lenkhandhabewinkels als Rückfallebene muß daher der Übergang vom Wert des Winkelsensors, der bis zu dessen Ausfall verwendet wird, auf den geschätzten Wert sprungfrei erfolgen. Hierzu bietet sich vorteilhaft ein integrierendes Verfahren an, welches in zeitdiskreter Darstellung für den geschätzten Lenkradwinkel ergibt

$$\varphi(T_{k+1}) = \varphi(T_k) + \omega T.$$

Solange der Winkelsensor gültige Werte liefert, können diese als $\varphi(T_k)$ verwendet werden.

6. Der Algorithmus muß die Anschläge simulieren

Wenn der Handmomentensteller zur Winkelschätzung herangezogen wird, fehlt die statische Kraftrückmeldung am Lenkrad. Dem Fahrer wird der Anschlag der Räder dann nicht durch einen simulierten Anschlag am Lenkrad mitgeteilt, so daß er dieses überdrehen kann. Der Algorithmus zur Winkelschätzung bzw. Berechnung muß deshalb verhindern, daß der berechnete Lenkhandhabewinkel größer als der Anschlagwinkel werden kann. Im einfachsten Fall wird dies dadurch realisiert, daß die Integration auf die Anschläge begrenzt wird.

$$\varphi = \begin{cases} \varphi_{Anschlag} & wenn\, \varphi > \varphi_{Anschlag} \\ -\varphi_{Anschlag} & wenn\, \varphi < -\varphi_{Anschlag} \end{cases}$$

Ohne diese Maßnahme müßte der Fahrer die gesamte Überdrehung der Lenkhandhabe rückgängig machen, bevor sich eine Lenkwirkung in die entgegengesetzte Richtung erzielen läßt.

7. Das Wiederaufsetzen auf den Winkelsensor muß möglich sein oder ausgeschlossen werden

Wenn der Winkelsensor, etwa nach einem Aussetzer, wieder gültige Werte liefert, ist ein direktes Wiederaufsetzen nicht möglich, da sich durch die Winkelschätzung eine Nullpunktverschiebung der Lenkhandhabe ergeben haben kann. Ein Aufsetzen ist durch einen in der Steuerung implementierten Algorithmus möglich, welcher den Offset zwischen Winkelsensor und geschätztem Winkel ermittelt, sobald der Winkelsensor wieder gültige Werte liefert. Dieser Offset kann dann mitgeführt oder vorteilhaft auch sukzessive zu Null reduziert werden; die so entstehende leichte Lenkbewegung wird vom Fahrer korrigiert. Zu prüfen ist allerdings, ob ein solches Aufsetzen überhaupt sinnvoll ist, da auch ein temporärer Ausfall des Winkelsensors einen schwerwiegenden Fehler darstellt.

Der Handmomentensteller kann somit vorteilhaft zur Winkelberechnung eingesetzt werden, ohne daß hardwaremäßig ein Mehraufwand entsteht. Hierdurch entsteht eine zusätzliche Rückfallebene, wenn beide Winkelsensoren am Lenkrad ausfallen. Die Systemverfügbarkeit steigt somit vorteilhaft.

Die bereits beschriebene Systemarchitektur für die erfindungsgemäße Servolenkung kann vorteilhaft zusätzlich vereinfacht werden, da die erfindungsgemäße Servolenkung über eine zusätzliche Rückfallebene verfügt. Die Fig. 2 zeigt eine Struktur für ein "Steer-by-wire"-System mit nur einem Winkelsensor am Lenkrad. Dieser Winkelsensor und die drei Steuergeräte sind vorzugsweise über einen (CAN-)Bus miteinander verbunden, so daß im Normalbetrieb allen Steuergeräten die Winkelinformation des Sensors zur Verfügung steht. Zusätzlich können die Steuergeräte über diesen Bus miteinander kommunizieren. Bei Ausfall des Winkelsensors wird der Handmomentensteller in seine Rückfallebene geschaltet, das heißt, die Stränge werden an ein Widerstandsnetz geschaltet. Der Lenkhandhabewinkel wird im Steuergerät des Handmomentenstellers geschätzt und von dort den anderen beiden Steuergeräten mitgeteilt. Bei Ausfall des (CAN-)Busses findet die Übertragung des Lenkwinkels über eine zusätzliche, beispielsweise potentialfreie analoge Verbindung statt. Unter der Voraussetzung, daß die Steuergeräte und der Winkelsensor am Lenkrad "fail-silent" sind, erfüllt die in Fig. 2 dargestellte Systemarchitektur die Anforderung, daß die Lenkfähigkeit bei einem beliebigen Einzelfehler erhalten bleibt.

**Patentansprüche**

1. Servolenkung für nicht spurgebundene Fahrzeuge, insbesondere Kraftfahrzeuge, mit

   - einer fahrerseitig betätigten Lenkhandhabe, z. B. Lenkrad,
   - einem Radwinkelsteller zur Lenkverstellung der Fahrzeugräder,
   - mindestens einem Winkelsensor zur Erfassung der Stellung der Lenkhandhabe,
   - einem Handmomentensteller zur Generierung eines Handmoments zur Simulierung einer Kraftrückmeldung an der Lenkhandhabe, wobei der Handmomentensteller einen Elektromotor aufweist,
   - mindestens einem Steuergerät zur Steuerung des Radwinkelstellers und des Handmomentenstellers,

   **dadurch gekennzeichnet, daß** im Falle eines Ausfalls mindestens eines Winkelsensors anhand der in mindestens einer Wicklung des Elektromotors durch manuelle Verdrehung der Lenkhandhabe induzierten Spannung und/oder des induzierten Stroms der Verdrehwinkel der Lenkhandhabe laufend mittels eines Steuergerätes ermittelt und zur Steuerung des Lenkwinkels der Fahrzeugräder verwendet wird.

2. Servolenkung nach Anspruch 1, **dadurch gekennzeichnet, daß** die an den Klemmen der mindestens einen Wicklung abgreifbare(n) Klemmen- bzw. Quellenspannung(en) (EMK) zur Ermittlung bzw. Schätzung des Lenkhandhabewinkels und/oder der Lenkhandhabewinkelgeschwindigkeit dient.

3. Servolenkung nach Anspruch 1 oder 2, **dadurch gekennzeichnet , daß** an die Klemmen mindestens einer Wicklung des Elektromotors jeweils ein elektrischer Widerstand angeschlossen ist.

4. Servolenkung nach einem der Ansprüche 1 bis 3, **dadurch gekennzeichnet, daß** ausgehend vom letzten mittels der Winkelsensoren ermittelten gültigen Lenkhandhabewinkels die Ermittlung des ungefähren Lenkhandhabewinkels erfolgt.

5. Servolenkung nach Anspruch 4, **dadurch gekennzeichnet, daß** die Berechnung der Lenkhandhabewinkeländerung anhand des Zusammenhangs

$$\Delta\varphi = a_i * {}_{t1}\int^{t2} U \, dt = a_i * [U(t_2) - U(t_1)]$$

erfolgt, sofern die Quellenspannungswerte $U(t_2)$ und $U(t_1)$ innerhalb eines vorgebbaren Bereichs sind.

6. Servolenkung nach einem der vorhergehenden Ansprüche, **dadurch gekennzeichnet daß** für Quellenspannungswerte unterhalb einer bestimmten Schwellenspannung eine Winkeländerung von $\Delta\varphi = 0$ gesetzt wird.

7. Servolenkung nach einem der vorhergehenden Ansprüche, **dadurch gekennzeichnet, daß** für verschieden große Quellenspannungswerte, insbesondere im Bereich und beim Überschreiten der Nenndrehzahl des Elektromotors, unterschiedliche Proportionalitätskonstanten $a_i$ zur Berechnung der Lenkhandhabewinkeländerung verwendet werden.

8. Servolenkung nach einem der vorhergehenden Ansprüche, **dadurch gekennzeichnet, daß** der Elektromotor ein insbesondere hochpoliger Kommutator- oder Gleichstrommotor ist.

9. Servolenkung nach Anspruch 8, **dadurch gekennzeichnet, daß** bei Verwendung eines Kommutatormotors für die Berechnung der Lenkhandhabewinkeländerung die Nulldurchgänge mindestens einer Klemmenspannung einer Wicklung überwacht wird.

10. Servolenkung nach Anspruch 9, **dadurch gekennzeichnet, daß** beim Nulldurchgang einer ersten Klemmenspannung die Differenz der übrigen Klemmenspannungen anhand der Differenz, der Vorzeichen der übrigen Klemmenspannungen und/oder der Art (positiv oder negativ) des Nulldurchgangs der ersten Klemmenspannung die Quellenspannung sowie die Drehrichtung der Lenkhandhabe ermittelbar ist.

11. Servolenkung nach einem der vorhergehenden Ansprüche, **dadurch gekennzeichnet, daß** bei der Berechnung der virtuellen Stellung der Lenkhandhabe ein Anschlag der Fahrzeugräder simuliert wird, derart, daß der berechnete Wert des Lenkhandhabewinkels nur innerhalb bestimmter Grenzen liegen kann.

12. Servolenkung nach einem der vorhergehenden Ansprüche, **dadurch gekennzeichnet, daß** sobald die Winkelsensoren der Lenkhandhabe wieder gültige Werte liefern, die Differenz zwischen gültigem Winkelsensorwert und bis dahin rechnerisch ermittelter Stellung der Lenkhandhabe vom Steuergerät für die Vorgabe an den Radwinkelsteller berücksichtigt wird.

13. Servolenkung nach einem der vorhergehenden Ansprüche, **dadurch gekennzeichnet, daß** die Servolenkung eine "Steer-by-wire"-Lenkung ist.

14. Servolenkung nach einem der vorhergehenden Ansprüche, **dadurch gekennzeichnet, daß** ein zusätzliches Steuergerät oder eine zusätzliche elektrische insbesondere analoge Schaltung die Berechnung des virtuellen Lenkhandhabewinkels durchführt.

15. Verfahren zur Ermittlung des Verdrehwinkels der Lenkhandhabe einer Servolenkung für nicht spurgebundene Fahrzeuge, insbesondere Kraftfahrzeug, bei dem

   - eine fahrerseitig betätigte Lenkhandhabe, z.B. Lenkrad, fahrerseitig betätigt wird,
   - ein Radwinkelsteller die Fahrzeugräder verstellt,
   - mindestens ein Winkelsensor die Stellung der Lenkhandhabe erfasst,
   - ein Handmomentensteller ein Handmoment zur Simulierung einer Kraftrückmeldung an der Lenkhandhabe generiert, wobei der Handmomentensteller einen Elektromotor aufweist,
   - mindestens ein Steuergerät den Radwinkelsteller und den Handmomentensteller steuert,

   **dadurch gekennzeichnet, daß** im Falle eines Ausfalls mindestens eines Winkelsensors anhand der in mindestens einer Wicklung des Elektromotors durch manuelle Verdrehung der Lenkhandhabe induzierten Spannung und/oder des induzierten Stroms der Verdrehwinkel der Lenkhandhabe laufend ermittelt und zur Steuerung des Lenkwinkels der Fahrzeugräder verwendet wird.

**Claims**

1. Power steering for non rail-borne vehicles, in particular motor vehicles, comprising

   - a driver-side operated steering control, for example steering wheel,
   - a wheel angle positioner for adjusting the steering of the vehicle wheels,
   - at least one angle sensor for detecting the position of the steering control,
   - a feel provider for generating a hand feel for simulating a force feedback on the steering control, whereby the feel provider has an electric motor,

- at least one control unit for controlling the wheel angle positioner and the feel provider,

**characterized in that** in the case of failure of at least one angle sensor, the angle to which the steering control is turned continuously, is determined by means of a control unit from the voltage, which is induced in at least one winding of the electric motor by turning the steering control manually and/or from the induced current and is used to control the steering angle of the vehicle wheels.

2. Power steering according to Claim 1, **characterized in that** the terminal and/or source voltage(s) (EMF) which can be tapped at the terminals of the at least one winding serves to determine and/or compute the steering control angle and/or the steering control angle speed.

3. Power steering according to Claim 1 or 2, **characterized in that** an electrical resistance is connected in each case to the terminals of at least one winding of the electric motor.

4. Power steering according to any one of Claims 1 to 3, **characterized in that** the approximate steering control angle is determined on the basis of the last valid steering control angle detected by means of the angle sensors.

5. Power steering according to Claim 4, **characterized in that** the steering control angle change is computed on the basis of the equation

$$\Delta\varphi = a_i * {}_{t1}\!\int^{t2} U\, dt = a_i * [U(t_2) - U(t_1)]$$

provided the source voltage levels $U(t_2)$ and $U(t_1)$ are within a pre-definable range.

6. Power steering according to any one of the preceding claims, **characterized in that** an angle change of $\Delta\varphi = 0$ is set in the case of source voltage levels below a certain threshold voltage.

7. Power steering according to any one of the preceding claims, **characterized in that** for varyingly large source voltage levels, in particular near and over the rated rpm of the electric motor, different proportionality constants $a_i$ are used for computing the steering control angle change.

8. Power steering according to any one of the preceding claims, **characterized in that** the electric motor is a particularly multi-pole commutator or DC motor.

9. Power steering according to Claim 8, **characterized in that** when a commutator motor is used for computing the steering control angle change the zero crossings of at least one terminal voltage of a winding are monitored.

10. Power steering according to Claim 9, **characterized in that** in the case of the zero crossing of a first terminal voltage the difference of the remaining terminal voltages, the source voltage as well as the direction of rotation of the steering control, can be determined on the basis of the difference, the signs of the remaining terminal voltages and/or the type (positive or negative) of the zero crossing of the first terminal voltage.

11. Power steering according to any one of the preceding claims, **characterized in that** when the virtual position of the steering control is computed a stop of the vehicle wheels is simulated, so that the computed value of the steering control angle can only lie within certain limits.

12. Power steering according to any one of the preceding claims, **characterized in that** as soon as the angle sensors of the steering control again provide valid values, the difference between valid angle sensor value and position of the steering control previously determined computationally is considered by the control unit for presetting the wheel angle positioner.

13. Power steering according to any one of the preceding claims, **characterized in that** the power steering is a "steer by wire" steering system.

14. Power steering according to any one of the preceding claims, **characterized in that** an additional control unit or an additional electrical, in particular analogue circuit computes the virtual steering control angle.

15. Procedure for calculating the angle to which the steering control is turned of a power steering for non rail-borne vehicles, in particular motor vehicles, wherein

- a driver-side operated steering control, for example steering wheel, is operated on the driver's side
- a wheel angle positioner adjusts the vehicle wheels,
- at least one angle sensor detects the position of the steering control,
- a feel provider generates a hand feel for simulating a force feedback on the steering control, whereby the feel provider has an electric motor,
- at least one control unit controls the wheel angle positioner and the feel provider,

**characterized in that** in the case of failure of at least one angle sensor, the angle to which the steering control is turned continuously, is determined from the voltage, which is induced in at least one winding of the electric motor by turning the steering control manually and/or from the induced current and is used to control the steering angle of the vehicle wheels.

## Revendications

1. Direction assistée pour véhicules non guidés, notamment pour véhicules automobiles, comprenant

   - une manette de direction actionnée du côté du conducteur, par exemple un volant,
   - un actionneur d'angle de roue destiné à régler la direction des roues du véhicule,
   - au moins un capteur d'angle destiné à détecter la position de la manette de direction,
   - un actionneur du couple manuel destiné à générer un couple manuel destiné à simuler un retour de force sur la manette de direction, l'actionneur du couple manuel comprenant un moteur électrique,
   - au moins un appareil de commande destiné à commander l'actionneur d'angle de roue et l'actionneur du couple manuel,

   **caractérisée en ce que** dans le cas d'une panne d'au moins un capteur d'angle, à l'aide de la tension et/ou du courant provoqués par la rotation manuelle de la manette de direction dans un des enroulements du moteur électronique, l'angle de rotation de la manette de direction est déterminé de façon continuelle au moyen d'un appareil de commande et utilisé pour commander l'angle de direction des roues du véhicule.

2. Direction assistée selon la revendication 1, **caractérisée en ce que** la(les) tension(s) aux bornes et/ou directement proportionnelle(s) au courant (FE) pouvant être prélevée(s) au niveau des bornes d'un des enroulements est(sont) utilisée(s) sert(servent) à déterminer et/ou estimer l'angle de manette de direction et/ou la vitesse de manette de direction.

3. Direction assistée selon la revendication 1 ou 2, **caractérisée en ce que** respectivement une résistance électrique est raccordée aux bornes d'au moins un enroulement du moteur électrique.

4. Direction assistée selon l'une quelconque des revendications 1 à 3, **caractérisée en ce que** la détermination de l'angle de manette de direction approximatif s'effectue à partir de l'angle de manette de direction significatif déterminé au moyen des capteurs d'angle.

5. Direction assistée selon la revendication 4, **caractérisée en ce que** le calcul de la modification de l'angle de la manette de direction s'effectue à l'aide de la relation

$$\Delta\varphi = a_i * {}_{t1}\!\int^{t2} U\, dt = a_i * [U(t_2) - U(t_1)]$$

   dans la mesure où les valeurs de tension directement proportionnelle au courant $U(t_2)$ et $U(t_1)$ se situent dans une plage pouvant être prédéfinie.

6. Direction assistée selon l'une quelconque des revendications précédentes, **caractérisée en ce qu'**une modification angulaire de $\Delta\varphi=0$ est mise en place pour des valeurs de tension directement proportionnelle au courant inférieures à une tension de seuil définie.

7. Direction assistée selon l'une quelconque des revendications précédentes, **caractérisée en ce que**, pour des valeurs de tension directement proportionnelles au courant présentant différents degrés, notamment dans la plage du régime nominal du moteur électrique et en dépassant celui-ci, différentes constantes de proportionnalité $a_i$ sont utilisées pour calculer la modification de l'angle de manette de direction.

8. Direction assistée selon l'une quelconque des revendications précédentes, **caractérisée en ce que** le moteur électrique est un moteur à collecteur présentant en particulier un grand nombre de pôles ou un moteur à courant continu.

9. Direction assistée selon la revendication 8, **caractérisée en ce qu'**en utilisant un moteur à collecteur pour calculer la modification de l'angle de manette de direction, on contrôle les passages au point zéro d'au moins une tension aux bornes d'un enroulement.

10. Direction assistée selon la revendication 9, **caractérisée en ce que**, dans le cas d'un passage au point zéro d'une première tension aux bornes, il est possible de déterminer la différence des autres tensions aux bornes à l'aide de la différence, des signes des autres tensions aux bornes et/ou du type (positif ou négatif) du passage au point zéro de la première tension aux bornes, la tension directement proportionnelle au courant ainsi que la direction de rotation de la manette de direction.

11. Direction assistée selon l'une quelconque des revendications précédentes, **caractérisée en ce qu'**au cours du calcul de la position virtuelle de la manette de direction, une butée des roues du véhicule est simulée, de telle sorte que la valeur calculée de l'angle de manette de direction ne peut se situer que dans des limites définies.

12. Direction assistée selon l'une quelconque des revendications précédentes, **caractérisée en ce que**, dès que les capteurs d'angle de la manette de direction fournissent à nouveau des valeurs significatives, la différence entre la valeur de capteur d'angle significative et la position de la manette de direction déterminée jusqu'à présent par un calcul de l'appareil de commande est prise en compte pour la prédétermination sur l'actionneur d'angle de roue.

13. Direction assistée selon l'une quelconque des revendications précédentes, **caractérisée en ce que** la direction assistée est une direction « commandée par câble ».

14. Direction assistée selon l'une quelconque des revendications précédentes, **caractérisée en ce qu'**un appareil de commande additionnel ou un circuit électrique supplémentaire, notamment analogique, réalise le calcul de l'angle virtuel de la manette de direction.

15. Procédé de détermination de l'angle de rotation de la manette de direction d'une direction assistée pour véhicules non guidés, notamment pour un véhicule automobile, dans lequel

   - une manette de direction actionnée du côté du conducteur, par exemple un volant, est actionnée du côté du conducteur,
   - un actionneur d'angle de roue règle les roues du véhicule,
   - au moins un capteur d'angle détecte la position de la manette de direction,
   - un actionneur du couple manuel génère un couple manuel destiné à simuler un retour de force sur la manette de direction, l'actionneur du couple manuel comprenant un moteur électrique,
   - au moins un appareil de commande contrôle l'actionneur d'angle de roue et l'actionneur du couple manuel,

   **caractérisé en ce que**, dans le cas d'une panne d'au moins un capteur d'angle, à l'aide de la tension et/ou du courant provoqués par la rotation manuelle de la manette de direction dans un des enroulements du moteur électrique, l'angle de rotation de la manette de direction est déterminé de façon continue et utilisé pour commander l'angle de direction des roues du véhicule.

Fig. 1

EP 1 190 936 B1

Fig. 2

Lenkhandhabe

Handmomenten-steller

Steuergerät Handmoment

CAN-Bus

Winkel-sensor

analog

analog

Steuergerät 1

Aktorik

(Redundant)

Radwinkel-steller

Steuergerät 2

Winkel-sensor 1

analog

Winkel-sensor 2

analog

EP 1 190 936 B1